(19) Europäisches Patentamt / European Patent Office / Office européen des brevets

(11) **EP 3 686 844 A1**

(12) **EUROPEAN PATENT APPLICATION**
published in accordance with Art. 153(4) EPC

(43) Date of publication:
**29.07.2020 Bulletin 2020/31**

(51) Int Cl.:
**G06T 7/246** (2017.01)

(21) Application number: **19872264.7**

(22) Date of filing: **04.09.2019**

(86) International application number:
**PCT/CN2019/104380**

(87) International publication number:
**WO 2020/078138 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.10.2018 CN 201811199700**

(71) Applicant: **Beijing Institute Of Technology Beijing 100081 (CN)**

(72) Inventors:
• **MA, Yue**
  **Beijing 100081 (CN)**
• **PEI, Peng**
  **Beijing 100081 (CN)**
• **PENG, Yifan**
  **Beijing 100081 (CN)**
• **RUAN, Shumin**
  **Beijing 100081 (CN)**

(74) Representative: **Wilson Gunn**
  **Blackfriars House**
  **The Parsonage**
  **5th Floor**
  **Manchester M3 2JA (GB)**

(54) **MOVING TARGET TRACKING METHOD AND SYSTEM**

(57)     The present invention discloses a moving target tracking method and a system thereof. The method includes: acquiring a moving region image of a moving target to be tracked; acquiring a classifier; judging whether the moving region image contains an occluder, and if so, classifying, by the classifier, a previous frame image of the moving region image, to obtain an initial tracking region image; if not, classifying, by the classifier, the moving region image, obtain an initial tracking region image; detecting a similarity between each initial tracking region image and a sample image, and deciding an initial tracking region image having the greatest similarity as a tracking region image; modifying the tracking region image through a kinematic model; tracking the moving target to be tracked according to the modified tracking region image. The method or system can pause updating of the template in the beginning of an occlusion of the target being tracked, and use a template for a previous frame as a template for the current frame, thereby avoiding the problem of tracking failure caused by the template being contaminated by occlusion.

FIG. 1

**Description**

The present application claims the benefit of Chinese patent application No.201811199700.2, titled "Moving Target Tracking Method and System thereof" and filed with the China National Intellectual Property Administration on October 16, 2018, which is incorporated by reference herein in its entirety.

**TECHNICAL FIELD**

The present invention relates to the field of target tracking, and in particular to a moving target tracking method and a system thereof.

**BACKGROUND**

In tracking a moving target using the KCF algorithm, fast or drastic movements of the target being tracked may cause the original KCF algorithm scanning region to fail to fully cover the target being tracked, resulting in tracking drift or even tracking failure. One way to ensure coverage of the target by the scanning region is by expanding the area of the scanning region, which, however, will increase computational work and reduce tracking efficiency. In order to ensure tracking accuracy without increasing computational work, another way is desired.

**SUMMARY OF INVENTION**

An objective of the present invention is to provide a moving target tracking method and a system thereof, which pauses updating of the template in the beginning of an occlusion of the target being tracked, and uses a template for a previous frame as a template for the current frame, thereby avoiding the problem of tracking failure caused by the template being contaminated by occlusion.
To achieve the above objective, the present invention provides the following solutions.
A moving target tracking method is provided, the method including:

acquiring a moving region image of a moving target to be tracked;

acquiring a classifier;

judging whether the moving region image contains an occluder, and if so,

classifying, by the classifier, a previous frame image of the moving region image, to obtain an initial tracking region image;

if not, classifying, by the classifier, the moving region image, obtain an initial tracking region image;

detecting a similarity between each initial tracking region image and a sample image, and deciding an initial tracking region image having the greatest similarity as a tracking region image;

modifying the tracking region image through a kinematic model;

tracking the moving target to be tracked according to the modified tracking region image.

Optionally, the judging whether the moving region image contains an occluder specifically includes:

acquiring a maximum detection response of the moving region image;

comparing the maximum detection response with a response threshold, and if the maximum detection response is greater than or equal to the response threshold,

determining that the moving region image does not contain an occluder;

if the maximum detection response is less than the response threshold, determining that the moving region image contains an occluder.

Optionally, the modifying the tracking region image through a kinematic model specifically includes:

estimating a center location of a moving region of the moving target to be tracked through the kinematics model;

modifying the tracking region image according to the center location.

A moving target tracking system is provided, the system including:

an image acquiring module, configured to acquire a moving region image of a moving target to be tracked;

a classifier acquiring module, configured to acquire a classifier;

a judging module, configured to judging whether the moving region image contains an occluder;

a first classifying module, configured to classify, using the classifier, a previous frame image of the moving region image to obtain an initial tracking region image, when the moving region image contains an occluder;

a second classifying module, configured to classify, using the classifier, the moving region image obtain an initial tracking region image, when the moving region image does not contain an occluder;

a detection module, configured to detect a similarity between each initial tracking region image and a sample image, and decide an initial tracking region image having the greatest similarity as a tracking region image;

a modification module, configured to modify the tracking region image through a kinematic model;

a tracking module, configured to track the moving target to be tracked according to the modified tracking region image.

Optionally, the judging module specifically includes:

a maximum detection response acquiring unit, configured to acquire a maximum detection response of the moving region image;

a comparison unit, configured to compare the maximum detection response with a response threshold;

a first determination unit, configured to determine that the moving region image does not contain an occluder when the maximum detection response is greater than or equal to the response threshold;

a second determination unit, configured to determine that the moving region image contains an occluder when the maximum detection response is less than the response threshold.

Optionally, the modification module specifically includes:

an estimation unit, configured to estimate a center location of a moving region of the moving target to be tracked through the kinematics model;

a modification unit, configured to modify the tracking region image according to the center location.

Compared with the prior art, the present invention provides the following technical effects. The present invention determines whether the moving region image contains an occluder, and if so, classify, by a classifier, a previous frame image of the moving region image, to obtain an initial tracking region image; if not, classify, by the classifier, the moving region image, obtain an initial tracking region image. The present invention pauses updating of the template in the beginning of an occlusion of the target being tracked, and uses a template for a previous frame as a template for the current frame, thereby avoiding the problem of tracking failure caused by the template being contaminated by occlusion.

## BRIEF DESCRIPTION OF THE DRAWINGS

The present invention will be described in more detail with reference to accompanying drawings.

FIG. 1 is a flowchart illustrating a moving target tracking method according to an embodiment of the present invention;

FIG. 2 is a structural block diagram illustrating a moving target tracking system according to an embodiment of the present invention.

## DETAILED DESCRIPTION OF PARTICULAR EMBODIMENTS

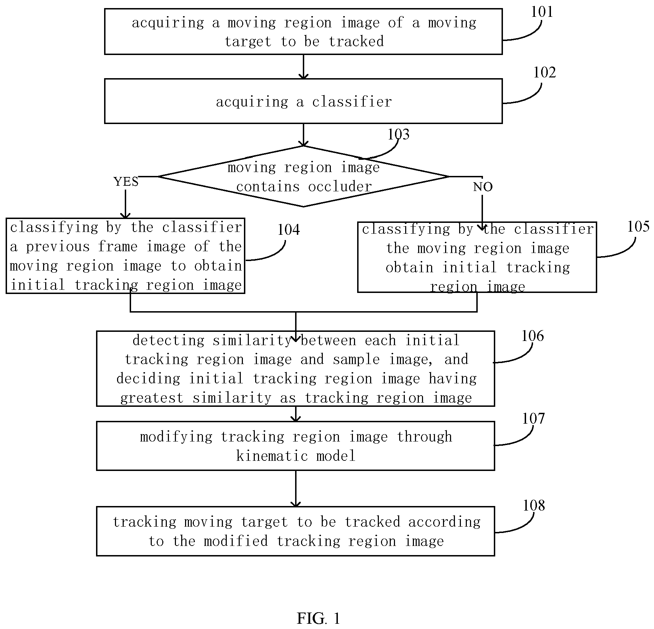

As shown in FIG. 1, a moving target tracking method includes:

Step 101: acquiring a moving region image of a moving target to be tracked;
Step 102: acquiring a classifier;
Step 103: judging whether the moving region image contains an occluder;
Specifically, acquiring a maximum detection response of the moving region image; comparing the maximum detection response with a response threshold, and if the maximum detection response is greater than or equal to the response threshold, determining that the moving region image does not contain an occluder; if the maximum detection response is less than the response threshold, determining that the moving region image contains an occluder.
The judging whether the moving region image contains an occluder is by comparing a maximum value of a detection response $f(\mathbf{z})$ of a candidate region image block with a prespecified threshold $\varepsilon$. Assuming a learning rate $\beta$ of 0.01, and a prespecified threshold $\varepsilon$ of 0.07,
when $f(\mathbf{z}) \geq \varepsilon$, i.e., in the event of no occlusion,

$$\mathbf{x}^{k+1} = \beta\mathbf{x}' + \left(1 - \beta\right)\mathbf{x}^{k}$$

$$\boldsymbol{\alpha}^{k+1} = \beta\boldsymbol{\alpha}' + \left(1 - \beta\right)\boldsymbol{\alpha}^{k};$$

when $f(\mathbf{z}) < \varepsilon$, i.e., in the event of occlusion,

$$\mathbf{x}^{k+1} = \mathbf{x}^{k}$$

$$\boldsymbol{\alpha}^{k+1} = \boldsymbol{\alpha}^{k},$$

where $\mathbf{x}^k$ and $\mathbf{x}^{k+1}$ are training samples updated upon a previous frame and the current frame, respectively; $\alpha^k$ and $\alpha^{k+1}$ are dual space coefficients updated upon the previous frame and the current frame, respectively; $\mathbf{x}'$ and $\alpha'$ are; $\beta$ is the learning rate of template updating.

Step 104: if so, classifying, by the classifier, a previous frame image of the moving region image, to obtain an initial tracking region image;

Step 105: if not, classifying, by the classifier, the moving region image, obtain an initial tracking region image;

Step 106: detecting a similarity between each initial tracking region image and a sample image, and deciding an initial tracking region image having the greatest similarity as a tracking region image;

Step 107: modifying the tracking region image through a kinematic model, which includes estimating a center location of a moving region of the moving target to be tracked through the kinematics model; modifying the tracking region image according to the center location.

Step 108: tracking the moving target to be tracked according to the modified tracking region image.

According to the embodiment provided by the present invention, the present invention discloses the following technical effects. The present invention determines whether the moving region image contains an occluder, and if so, classify, by a classifier, a previous frame image of the moving region image, to obtain an initial tracking region image; if not, classify, by the classifier, the moving region image, obtain an initial tracking region image. The present invention pauses updating of the template in the beginning of an occlusion of the target being tracked, and uses a template for a previous frame as a template for the current frame, thereby avoiding the problem of tracking failure caused by the template being contaminated by occlusion.

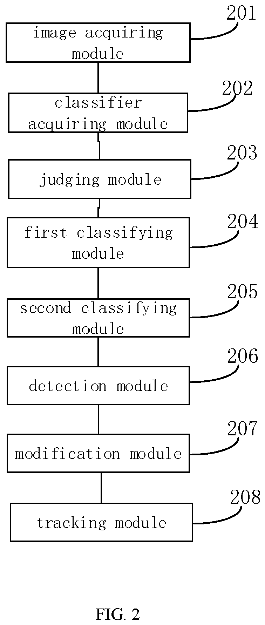

As shown in FIG. 2, a moving target tracking system includes:

an image acquiring module 201, configured to acquire a moving region image of a moving target to be tracked;

a classifier acquiring module 202, configured to acquire a classifier;

a judging module 203, configured to judging whether the moving region image contains an occluder;

The judging module 203 may include:

a maximum detection response acquiring unit, configured to acquire a maximum detection response of the moving region image;

a comparison unit, configured to compare the maximum detection response with a response threshold;

a first determination unit, configured to determine that the moving region image does not contain an occluder when the maximum detection response is greater than or equal to the response threshold;

a second determination unit, configured to determine that the moving region image contains an occluder when the maximum detection response is less than the response threshold.

The moving target tracking system further includes: a first classifying module 204, configured to classify, using the classifier, a previous frame image of the moving region image to obtain an initial tracking region image, when the moving region image contains an occluder;

a second classifying module 205, configured to classify, using the classifier, the moving region image obtain an initial tracking region image, when the moving region image does not contain an occluder;

a detection module 206, configured to detect a similarity between each initial tracking region image and a sample image, and decide an initial tracking region image having the greatest similarity as a tracking region image;

a modification module 207, configured to modify the tracking region image through a kinematic model;

The modification module 207 may include:

an estimation unit, configured to estimate a center location of a moving region of the moving target to be tracked through the kinematics model;

a modification unit, configured to modify the tracking region image according to the center location.

The moving target tracking system further includes: a tracking module 208, configured to track the moving target to be tracked according to the modified tracking region image.

Embodiments in this specification are described in a progressive manner. Each embodiment focuses on the differences from other embodiments. For the same and similar parts, please refer to the other embodiments. System embodiments correspond to method embodiments, and therefore for the relevant parts of the system embodiments, please refer to the corresponding method embodiments.

Specific examples are used herein to explain the principles and implementation of the present invention. The description of the above embodiments is for illustrative purposes only, for a better understanding of the method of the present invention and its core ideas. Those skilled in the art can make modifications to the specific implementations and the applications of the present disclosure according to the ideas of the present invention. In summary, the content of this specification should not be construed as limiting the scope of the present invention.

**Claims**

1. A moving target tracking method, comprising:

   acquiring a moving region image of a moving target to be tracked;
   acquiring a classifier;
   judging whether the moving region image contains an occluder, and if so, classifying, by the classifier, a previous frame image of the moving region image, to obtain an initial tracking region image;
   if not, classifying, by the classifier, the moving region image, obtain an initial tracking region image;
   detecting a similarity between each initial tracking region image and a sample image, and deciding an initial tracking region image having the greatest similarity as a tracking region image;
   modifying the tracking region image through a kinematic model;
   tracking the moving target to be tracked according to the modified tracking region image.

2. The moving target tracking method according to claim 1, wherein the the judging whether the moving region image contains an occluder comprises:

   acquiring a maximum detection response of the moving region image;
   comparing the maximum detection response with a response threshold, and if the maximum detection response is greater than or equal to the response threshold,
   determining that the moving region image does not contain an occluder;
   if the maximum detection response is less than the response threshold, determining that the moving region image contains an occluder.

3. The moving target tracking method according to claim 1, wherein the modifying the tracking region image through a kinematic model comprises:

   estimating a center location of a moving region of the moving target to be tracked through the kinematics model;
   modifying the tracking region image according to the center location.

4. A moving target tracking system, comprising:

   an image acquiring module, configured to acquire a moving region image of a moving target to be tracked;
   a classifier acquiring module, configured to acquire a classifier;
   a judging module, configured to judging whether the moving region image contains an occluder;
   a first classifying module, configured to classify, using the classifier, a previous frame image of the moving region image to obtain an initial tracking region image, when the moving region image contains an occluder;
   a second classifying module, configured to classify, using the classifier, the moving region image obtain an initial tracking region image, when the moving region image does not contain an occluder;
   a detection module, configured to detect a similarity between each initial tracking region image and a sample image, and decide an initial tracking region image having the greatest similarity as a tracking region image;
   a modification module, configured to modify the tracking region image through a kinematic model;
   a tracking module, configured to track the moving target to be tracked according to the modified tracking region image.

5. The moving target tracking system according to claim 4, wherein the judging module comprises:

   a maximum detection response acquiring unit, configured to acquire a maximum detection response of the moving region image;
   a comparison unit, configured to compare the maximum detection response with a response threshold;
   a first determination unit, configured to determine that the moving region image does not contain an occluder when the maximum detection response is greater than or equal to the response threshold;
   a second determination unit, configured to determine that the moving region image contains an occluder when the maximum detection response is less than the response threshold.

6. The moving target tracking system according to claim 4, wherein the modification module comprises:

   an estimation unit, configured to estimate a center location of a moving region of the moving target to be tracked through the kinematics model;
   a modification unit, configured to modify the tracking region image according to the center location.

acquiring a moving region image of a moving target to be tracked — 101

acquiring a classifier — 102

moving region image contains occluder — 103

YES → classifying by the classifier a previous frame image of the moving region image to obtain initial tracking region image — 104

NO → classifying by the classifier the moving region image obtain initial tracking region image — 105

detecting similarity between each initial tracking region image and sample image, and deciding initial tracking region image having greatest similarity as tracking region image — 106

modifying tracking region image through kinematic model — 107

tracking moving target to be tracked according to the modified tracking region image — 108

FIG. 1

image acquiring module — 201

classifier acquiring module — 202

judging module — 203

first classifying module — 204

second classifying module — 205

detection module — 206

modification module — 207

tracking module — 208

FIG. 2

## INTERNATIONAL SEARCH REPORT

| International application No. |
| --- |
| **PCT/CN2019/104380** |

| A. | CLASSIFICATION OF SUBJECT MATTER |
| --- | --- |

G06T 7/246(2017.01)i

According to International Patent Classification (IPC) or to both national classification and IPC

| B. | FIELDS SEARCHED |
| --- | --- |

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNPAT; CNKI; WPI; EPODOC; IEEE: 运动, 目标, 跟踪, 区域, 图像, 分类器, 上一帧, 前一帧, 初始, 模型, 修正, 校正, 相似度, target, move, track, region, image, classifier, last, initial, template, modify, similarity

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 109448021 A (BEIJING INSTITUTE OF TECHNOLOGY) 08 March 2019 (2019-03-08) claims 1-6 | 1-6 |
| A | CN 102999920 A (XIDIAN UNIVERSITY) 27 March 2013 (2013-03-27) description, paragraphs [0031]-[0049] | 1-6 |
| A | CN 108427960 A (NANJING UNIVERSITY OF AERONAUTICS AND ASTRONAUTICS) 21 August 2018 (2018-08-21) entire document | 1-6 |
| A | CN 107480704 A (NANKAI UNIVERSITY) 15 December 2017 (2017-12-15) entire document | 1-6 |
| A | US 2016203614 A1 (SAMSUNG ELECTRONICS CO., LTD.) 14 July 2016 (2016-07-14) entire document | 1-6 |
| A | 许晓航等 (XU, Xiaohang et al.). "复杂背景及遮挡条件下的运动目标跟踪 (Moving Object Tracking in Complex Background and Occlusion Conditions)" 光电工程 (Opto-Electronic Engineering), Vol. 40, No. (1), 31 January 2013 (2013-01-31), entire document | 1-6 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 November 2019** | **28 November 2019** |

| Name and mailing address of the ISA/CN | Authorized officer |
| --- | --- |
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/104380**

| Patent document cited in search report | | | Publication date (day/month/year) | Patent family member(s) | Publication date (day/month/year) |
|---|---|---|---|---|---|
| CN | 109448021 | A | 08 March 2019 | None | |
| CN | 102999920 | A | 27 March 2013 | None | |
| CN | 108427960 | A | 21 August 2018 | None | |
| CN | 107480704 | A | 15 December 2017 | None | |
| US | 2016203614 | A1 | 14 July 2016 | None | |

Form PCT/ISA/210 (patent family annex) (January 2015)

**EP 3 686 844 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811199700